# EUROPÄISCHE PATENTSCHRIFT

(11) **EP 3 414 145 B1**
(45) Veröffentlichungstag und Bekanntmachung des Hinweises auf die Patenterteilung: **23.09.2020**
(21) Anmeldenummer: 17702022.9
(22) Anmeldetag: 19.01.2017
(51) Int. Cl.: B62D 9/00

(54) **VERFAHREN ZUR BEEINFLUSSUNG DER FAHRTRICHTUNG VON KRAFTFAHRZEUGEN**
METHOD FOR INFLUENCING THE DIRECTION OF TRAVEL OF MOTOR VEHICLES
PROCÉDÉ PERMETTANT D'INFLUENCER LE SENS DE MARCHE DE VÉHICULES AUTOMOBILES

(30) Priorität: 11.02.2016 DE 102016001592
(43) Veröffentlichungstag der Anmeldung: 19.12.2018
(73) Patentinhaber: Audi AG, 85045 Ingolstadt (DE)
(72) Erfinder: BROK, Tobias, 85092 Kösching (DE); WESENBERG, André, 85276 Pfaffenhofen (DE)
(86) Internationale Anmeldenummer: PCT/EP2017/051079
(87) Internationale Veröffentlichungsnummer: WO 2017/137228

(56) Entgegenhaltungen:
- EP-A1- 3 090 907
- EP-A2- 0 979 769
- DE-A1- 10 330 894
- DE-A1-102006 046 497
- DE-A1-102008 046 007
- DE-A1-102009 033 105
- DE-A1-102014 200 608
- US-A1- 2005 236 896

## Beschreibung

Die Erfindung betrifft ein Verfahren zur Beeinflussung der Fahrtrichtung von Kraftfahrzeugen nach dem Oberbegriff von Anspruch 1. Die Erfindung betrifft auch ein Kraftfahrzeug mit einem redundanten Lenksystem nach dem Oberbegriff von Anspruch 8 und ein Computerprogramm mit Programmcodemitteln gemäß dem Oberbegriff von Anspruch 9.

Konventionelle Lenksysteme für Kraftfahrzeuge sind aus der Praxis hinlänglich bekannt. Mit wenigen Ausnahmen werden heute praktisch alle Kraftfahrzeuge mit einer sogenannten Achsschenkellenkung ausgestattet.

In jüngster Zeit werden bei Kraftfahrzeugen vermehrt Fahrerassistenzsysteme eingesetzt, um eine Automatisierung der Fahraufgabe vorzunehmen. Als Beispiel seien ein Abstandsregeltempomat bzw. eine Adaptive Cruise Control, ein Stauassistent, ein Autobahnpilot oder ein vollständig autonom agierendes Kraftfahrzeug genannt. Je höher der Grad der Automatisierung der Fahraufgabe ist, desto größer sind die Anforderungen an die Zuverlässigkeit der an den Aufgaben beteiligten Sensoren, Steuergeräten, Aktuatoren und mechanischen Komponenten. Die Ausfallwahrscheinlichkeiten aller beteiligten Komponenten müssen möglichst gering sein, wofür häufig nur redundante Systeme eine Lösung darstellen. Für Lenksysteme müssen somit z. B. für hochautomatisiertes Fahren zumindest teilredundante Lenkungen entwickelt werden.

Der Aufwand, die geforderte Ausfallsicherheit für ein Lenksystem umzusetzen, ist sehr weitreichend und erfordert üblicher Weise die Dopplung von Prozessoren, Steckern, Wicklungen, Verkabelungen und von mechanischen Komponenten. Die Baugruppe wird somit nicht nur sehr komplex, sondern auch sehr teuer. Teilweise ist aus Funktions- und Bauraumgründen eine Dopplung, insbesondere mechanischer Bauteile, gar nicht möglich.

Es ist bekannt, die Kraftfahrzeugbremse für eine Kraftfahrzeugstabilisierung oder für eine redundante Lenkaufgabe zu nutzen. Im Wesentlichen soll dabei durch einseitiges Bremsen ein Giermoment erzeugt und dadurch die Lenkung des Kraftfahrzeugs unterstützt werden. Dabei werden einzelne oder alle Räder auf einer Seite des Kraftfahrzeugs angebremst.

Die DE 196 05 553 C1 betrifft ein Lenksystem mit einem Notlenksystem, welches Radbremsen an unterschiedlichen Kraftfahrzeugseiten in Abhängigkeit von der Betätigung einer Lenkhandhabe ungleich zu betätigen vermag.

Die DE 10 2014 200 608 A1 betrifft ein Verfahren zum Betreiben eines Kraftfahrzeugs, das wenigstens zwei Radachsen, von denen mindestens eine lenkbare Räder aufweist, und wenigstens eine Einrichtung zum radindividuellen Beeinflussen eines Drehmoments der Räder aufweist, wobei ein Lenken der Räder in Abhängigkeit von einem gewünschten Lenkwinkel durch eine Servolenkung unterstützt wird. Es ist vorgesehen, dass die Funktionsfähigkeit der Servolenkung überwacht wird, und dass, wenn eine Fehlfunktion der Servolenkung erfasst wird, zum Einstellen des gewünschten Lenkwinkels an den lenkbaren Rädern durch die Einrichtung an nur einem der lenkbaren Räder ein Drehmoment beeinflusst wird.

Es ist bekannt, dass die Lenkwirkung durch eine Drehmomentbeeinflussung umso größer ist, je positiver bzw. größer der sogenannte Lenkrollradius bzw. Lenkrollhalbmesser der lenkbaren Achsen des Kraftfahrzeugs ist. Unter einem Lenkrollradius versteht man den Abstand des Schnittpunkts einer gedachten, verlängerten Linie der Lenkachse bzw. Lenkdrehachse durch die Ebene der Fahrbahn zu dem Schnittpunkt der Mittellinie der Radaufstandsfläche durch die Ebene der Fahrbahn. Befindet sich der Schnittpunkt der gedachten Linie der Lenkachse mit der Fahrbahn näher an der Kraftfahrzeugmitte als der Schnittpunkt der Mittellinie der Radaufstandsfläche mit der Fahrbahn, so spricht man von einem positiven Lenkrollradius. Liegt der Schnittpunkt der gedachten Linie der Lenkachse hingegen weiter entfernt von der Kraftfahrzeugmitte als der Schnittpunkt der Mittelinie der Radaufstandsfläche mit der Fahrbahn, ist der Lenkrollradius negativ. Ein Lenkrollradius gleich Null liegt vor, wenn beide Schnittpunkte zusammenfallen. Ein Kraftfahrzeug mit positivem Lenkrollradius neigt bei einem Bremsvorgang mit unterschiedlicher Reibhaftung auf den einzelnen Spurseiten dazu, zu der Seite mit der besseren Haftung zu ziehen. Ein derartiges Kraftfahrzeug ist höchst empfindlich gegenüber Störungen im Bereich des Lenksystems bzw. der Räder und kann z. B. beim Überfahren von Unebenheiten sogar ausbrechen. Hingegen zeigt ein Kraftfahrzeug mit negativem Lenkrollradius einen selbststabilisierenden Geradeauslauf. Ein Ausbrechen des Kraftfahrzeugs kann durch einen negativen Lenkrollradius verhindert oder zumindest unterdrückt werden; das Lenksystem wirkt spurstabilisierend. Folglich wird der Lenkrollradius aus Komfortgründen bei Kraftfahrzeugen häufig negativ bis gering positiv ausgelegt. Dies führt nun allerdings dazu, dass durch einseitiges Bremsen ebenfalls keine größeren Lenk- bzw. Giermomente realisiert werden können. Ein derart aufgebautes redundantes Lenksystem kann somit nur stark eingeschränkt an einer Beeinflussung der Fahrtrichtung mitwirken.

Für eine Stabilisierung eines vierrädrigen Fahrzeugs mit Radnabenmotor beim Bremsen und/oder Antreiben schlägt die DE 10 2007 043 159 B4 vor, dass ein sogenannter Achsschenkelversatz so bestimmt wird, dass das Rad des Fahrzeugs stabilisiert wird.

Ein gattungsgemäßes Verfahren ist aus der DE 103 30 894 A1 bekannt. Die DE 103 30 894 A1 betrifft ein mehrspuriges, lenkbares Fahrzeug mit einem an einem Radträger drehbeweglich gelagerten Fahrzeugrad sowie ein Verfahren zur Beeinflussung der Fahrtrichtung eines derartigen Fahrzeugs.

Außerdem betrifft die EP 3 090 907 A1 ein Fahrzeug mit einem sekundärer Lenksystem. Die US 2005/0236896 betrifft ein Verfahren zum Steuern eines Kraftfahrzeugs durch eine Bremslenkung in Abhängigkeit einer Lenkvorgabe. Der vorliegenden Erfindung liegt die Aufgabe zugrunde, ein Verfahren zur Erzielung einer redundanten Lenkaufgabe zur Beeinflussung der Fahrtrichtung von Kraftfahrzeugen zu schaffen, das mit technisch einfachen Mitteln realisiert werden kann und somit auch wirtschaftlich günstig ist.

Erfindungsgemäß wird die Aufgabe durch die in Anspruch 1 genannten Merkmale gelöst.

Dadurch, dass der Lenkrollradius wenigstens einer der Lenkachsen justiert wird, bevor eine orthogonal zur Fahrtrichtung wirkende Kraftkomponente im Bereich wenigstens eines Rades auf das erste Lenksystem aufgebracht wird, kann das redundante Lenksystem eine deutlich flexiblere Beeinflussung der Fahrtrichtung des Kraftfahrzeugs bereits bei relativ geringer Kraftkomponente verursachen. Hierdurch kann für Kraftfahrzeuge, beispielsweise Kraftfahrzeuge mit zumindest teilweise automatisierter Fahrfunktion, eine günstige konventionelle Lenkung, beispielsweise eine Achsschenkellenkung, verwendet werden. Die Redundanz des Lenksystems kann dann auf Grundlage der vorliegenden Erfindung technisch und wirtschaftlich einfach gewährleistet werden.

Mit einer orthogonal zur Fahrtrichtung wirkenden Kraftkomponente ist vorliegend gemeint, dass eine auf das erste Lenksystem aufgebrachte Kraft zumindest anteilig orthogonal zur Fahrtrichtung wirkt. Eine derartige Kraft kann beispielsweise über die Bremsanlage des Kraftfahrzeugs eingebracht werden. Alternativ kann die Kraft auch durch eine aktorische Verstellung der Radaufhängung wenigstens eines der Räder der Lenkachse erzeugt werden. Selbstverständlich sind auch andere Vorgehensweisen zur Einbringung der geforderten Kraft vorstellbar, die der Fachmann, je nach Ausführung des Lenksystems, der Räder, des Antriebssystems, des Bremssystems und der Radaufhängung, vornehmen kann.

Obwohl die vorliegende Erfindung grundsätzlich in Kombination mit vielen verschiedenen Lenkungstechniken eingesetzt werden kann, ist sie insbesondere für den Einsatz mit einer Achsschenkellenkung vorgesehen.

Erfindungsgemäß ist vorgesehen, dass die orthogonal zur Fahrtrichtung wirkende Kraftkomponente zumindest anteilig durch eine Beeinflussung der Drehmomente, die auf die wenigstens zwei Räder der Lenkachse aufgebracht werden, erzeugt wird. Eine Beeinflussung der Drehmomente unabhängig voneinander kann beispielsweise durch einseitiges Bremsen erreicht werden. Eine Beeinflussung der Drehmomente unabhängig voneinander kann allerdings auch durch einseitiges Beschleunigen erreicht werden.

Die erfindungsgemäße Lösung sieht außerdem vor, dass eine Steuerung und/oder eine Regelung das redundante Lenksystem abhängig von einer Eingabe eines Fahrers an eine Lenkhandhabe durch die Stellgrößen Lenkrollradius der Lenkachse und/oder Drehmomente, die auf die Räder aufgebracht werden, steuert bzw. regelt.

Es kann auch vorgesehen sein, dass die orthogonal zur Fahrtrichtung wirkende Kraftkomponente zumindest anteilig durch eine Beeinflussung der Drehzahlen der wenigstens zwei Räder der Lenkachse relativ zueinander erzeugt wird. Eine Beeinflussung der Drehzahlen der wenigstens zwei Räder der Lenkachse relativ zueinander kann wiederum durch einseitiges Bremsen oder einseitiges Beschleunigen erreicht werden.

Die orthogonal zur Fahrtrichtung wirkende Kraftkomponente kann zumindest anteilig durch eine Beeinflussung der jeweiligen Leistung, ausgehend von einem Antriebsmotor des Kraftfahrzeugs, die auf die wenigstens zwei Räder der Lenkachse aufgebracht wird, erzeugt werden.

Durch die orthogonal zu der Fahrtrichtung wirkende Kraftkomponente wird einerseits direkt ein starkes Giermoment auf das Kraftfahrzeug aufgebracht und andererseits Kräfte auf die Lenkmechanik aufgebracht, wodurch die beeinflussten Räder über die Kopplung mit dem Lenkgetriebe auch die nicht beeinflussten Räder in eine gewünschten Fahrtrichtung eindrehen.

Eine derartige Lösung kann von Vorteil sein, da das erste Lenksystem und das Bremssystem bzw. Antriebssystem des Kraftfahrzeugs üblicher Weise vollständig oder nahezu vollständig autark voneinander agieren. Hierdurch wird volle oder nahezu volle Redundanz möglich. Sogar bei einem Ausfall des Lenksystems, der eine vollständige Blockierung des Lenksystems verursacht, kann durch eine Beeinflussung der aufgebrachten Drehmomente bzw. Drehzahlen dennoch eine Restlenkwirkung über das Giermoment erzielt werden.

In einer weiteren Ausführung der Erfindung kann vorgesehen sein, dass die orthogonal zur Fahrtrichtung wirkende Kraftkomponente zumindest anteilig durch eine Verstellung des Spurwinkels wenigstens eines der Räder der Lenkachse erzeugt wird. Eine derartige Manipulation der Radaufhängung bzw. des Radträgers kann beispielsweise durch Aktuatoren der Radaufhängung erfolgen.

Ein Beispiel für eine aktorisch verstellbare Radaufhängung ist ein sogenannter Twin-Radträger, der in der DE 10 2009 033 105 A1 beschrieben wird. Es wird eine Verstellvorrichtung für eine Radaufhängung von Kraftfahrzeugen offenbart, bei der mit zumindest einem Aktuator ein Radsturz und ein Lenkwinkel einstellbar sind.

Die orthogonal zur Fahrtrichtung wirkende Kraftkomponente kann zur Einstellung eines Lenkwinkels genutzt werden. In Abhängigkeit des zuvor justierten Lenkrollradius kann die Fahrtrichtung des Kraftfahrzeugs durch das redundante Lenksystem hierdurch in einem definierten Maß beeinflusst werden.

In einer vorteilhaften Variante der Erfindung kann vorgesehen sein, dass der Lenkrollradius der wenigstens einen Lenkachse derart justiert wird, dass der Lenkrollradius während des Betriebes des redundanten Lenksystems, ausgehend von einer Grundeinstellung, quantitativ erhöht ist.

Bei einer Grundeinstellung des Lenkrollradius kann es sich insbesondere um einen negativen Lenkrollradius handeln. Ein negativer Lenkrollradius kann, wie eingangs erwähnt, einen deutlich erhöhten Komfort bei der Bedienung des Lenksystems ermöglichen. Um den Funktionsumfang des redundanten Lenksystems zu verstärken, kann es von Vorteil sein, den spurstabilisierenden, komfortablen Lenkrollradius zu erhöhen. Der Lenkrollradius kann somit auf einen schwach negativen, einen neutralen, einen schwach positiven oder besonders bevorzugt auf einen stark positiven Wert justiert werden. Bei einem stark positiven Lenkrollradius kann bereits ein geringfügiger Eingriff, insbesondere durch die orthogonal zur Fahrtrichtung wirkende Kraftkomponente, einen großen Effekt auf das gesamte erste Lenksystem zeigen. Eine Beeinflussung einzelner Räder, die auf der Lenkachse des ersten Lenksystems befestigt sind, kann somit eine Beeinflussung des gesamten Lenksystems hervorrufen, d.h. auch die nicht beeinflussten Räder auslenken.

In einer Ausgestaltung der Erfindung kann vorgesehen sein, dass der Lenkrollradius an einer Vorderachse des Kraftfahrzeugs justiert wird und/oder die orthogonal zur Fahrtrichtung wirkende Kraftkomponente auf eine Vorderachse des Kraftfahrzeugs aufgebracht wird. Dies kann insbesondere dann von Vorteil sein, wenn die wenigstens eine Lenkachse ebenfalls als eine Vorderachse des Kraftfahrzeugs ausgebildet ist, wie es bei den meisten Kraftfahrzeugen üblich ist. Selbstverständlich kann auch vorgesehen sein, dass der Lenkrollradius an einer Hinterachse des Kraftfahrzeugs justiert wird und/oder die orthogonal zur Fahrtrichtung wirkende Kraftkomponente auf eine Hinterachse des Kraftfahrzeugs aufgebracht wird.

In einer Weiterbildung der Erfindung kann vorgesehen sein, dass die Steuerung und/oder die Regelung das redundante Lenksystem abhängig von der Eingabe des Fahrers an die Lenkhandhabe durch eine zusätzliche Stellgröße betreffend einen Spurwinkel der Räder steuert bzw. regelt. Insbesondere eine Regelung, die die redundante Lenkung in Abhängigkeit einer Eingabe eines Fahrers an eine Lenkhandhabe beeinflusst, kann in vorteilhafter Weise verwendet werden. Im Optimalfall kann die redundante Lenkung dann wie eine konventionelle Lenkung bzw. wie die erste Lenkung agieren und der Fahrer auch bei einem Ausfall der ersten Lenkung das Kraftfahrzeug noch nahezu uneingeschränkt steuern. Selbstverständlich können als Stellgrößen zusätzlich oder alternativ auch die Drehzahlen der Räder berücksichtigt werden.

In einer Ausgestaltung der Erfindung kann vorgesehen sein, dass der Lenkrollradius justiert wird, indem ein Sturz und/oder eine Spreizung und/oder ein oder mehrere Gelenkpunkte der Radaufhängungen der wenigstens einen Lenkachse mittels eines Aktuators verstellt wird.

Mit einem Sturz ist die Neigung der Radebene zur Innenseite des Kraftfahrzeugs oder zur Außenseite des Kraftfahrzeugs bezüglich einer orthogonal zu der Fahrbahnfläche stehenden Gerade gemeint. Durch die Manipulation des Sturzes kann der Lenkrollradius beeinflusst werden, indem der Berührpunkt der Radaufstandsfläche mit der Fahrbahn verschoben wird. Mit einer Spreizung ist die Veränderung der Neigung der Lenkachse selbst gemeint. Hierdurch lässt sich ebenfalls der Lenkrollradius justieren, da der Schnittpunkt der gedachten, verlängerten Linie der Lenkachse durch die Fahrbahnfläche verschoben werden kann. Eine Justierung des Lenkrollradius kann auch dadurch erreicht werden, dass einer oder mehrere Gelenkpunkte einer Radaufhängung verstellt werden. In einer Weiterbildung der Erfindung kann insbesondere vorgesehen sein, dass ein Twin-Radträger oder ein Doppelquerlenker als Radaufhängung eingesetzt wird. Gegebenenfalls kann auch vorgesehen sein, dass der Lenkrollradius durch eine Manipulation der Einpresstiefe der Felge verstellt wird. Es kann vorgesehen sein, den sogenannten Störkrafthebel direkt zu manipulieren, indem die Radaufhängung parallel zur Fahrbahnebene verschiebbar gelagert ist.

In einer Weiterbildung der Erfindung kann vorgesehen sein, dass das redundante Lenksystem automatisch in Betrieb genommen wird, wenn das erste Lenksystem ausfällt oder in seiner Funktion eingeschränkt ist. Es kann auch vorgesehen sein, dass das redundante Lenksystem das erste Lenksystem lediglich unterstützt, beispielsweise wenn die Servolenkung des Kraftfahrzeugs ausfällt. Selbstverständlich kann das redundante Lenksystem auch dann eingesetzt werden, wenn das erste Lenksystem vollständig versagt. Dies gilt auch bei einer Blockierung des ersten Lenksystems. Bei einer Blockierung des ersten Lenksystems kann eine Restlenkwirkung über das Giermoment des Kraftfahrzeugs bestehen.

Die Erfindung betrifft auch ein Kraftfahrzeug mit einem redundanten Lenksystem, umfassend eine Lenkachse mit wenigstens zwei Rädern, wobei die Räder durch aktorisch verstellbare Radaufhängungen mit der Lenkachse verbunden sind, und eine Einrichtung zur Erzeugung einer orthogonal zur Fahrtrichtung wirkenden Kraftkomponente im Bereich wenigstens eines Rades, die auf das erste Lenksystem wirkt. Dabei ist vorgesehen, dass das redundante Lenksystem eine Vorrichtung zur Justierung des Lenkrollradius wenigstens einer der Lenkachsen und wenigstens ein elektronisches Regel- und/oder Steuergerät aufweist, auf dem ein Verfahren zur Beeinflussung der Fahrtrichtung von Kraftfahrzeugen ausführbar ist.

Als Radaufhängung kann insbesondere ein Twin-Radträger, wie in der DE 10 2009 033 105 A1 beschrieben, oder ein Doppelquerlenker verwendet werden.

Die Erfindung betrifft ferner ein Computerprogramm mit Programmcodemitteln, um ein Verfahren zur Beeinflussung der Fahrtrichtung von Kraftfahrzeugen, wie vorstehend beschrieben, durchzuführen, wenn das Programm auf einem Mikroprozessor eines Computers, insbesondere auf einem elektronischen Regel- und/oder Steuergerät eines Kraftfahrzeugs, ausgeführt wird. Eine derartige Softwarelösung kann beispielsweise dann von Vorteil sein, wenn die für das Verfahren notwendige Sensorik und Aktorik hardwareseitig bereits vorliegt. In diesem Fall kann mittels eines einfachen Software-Updates ein Funktionsupgrade vorgenommen werden. Dies bringt unter anderem Vorteile wirtschaftlicher Natur, der Kundenzufriedenheit und Restwertsteigerung der Kraftfahrzeuge.

Nachfolgend sind Ausführungsbeispiele der Erfindung anhand der Zeichnung beschrieben. Merkmale eines Ausführungsbeispiels sind auch losgelöst von den anderen Merkmalen des gleichen Ausführungsbeispiels umsetzbar und können dementsprechend von einem Fachmann zu weiteren sinnvollen Kombinationen mit Merkmalen anderer Ausführungsbeispiele verbunden werden. In den Figuren sind funktionsgleiche Elemente mit denselben Bezugszeichen versehen.

Es zeigt schematisch:
- Fig. 1: eine Darstellung eines Lenksystems eines Kraftfahrzeugs;
- Fig. 2: drei beispielhafte Einstellungen für einen Lenkrollradius;
- Fig. 3: einen Twin-Radträger der DE 10 2009 033 105 A1 zur Verwendung mit der Erfindung;
- Fig. 4: eine Darstellung verschiedener Stellgrößen zur Justierung des Lenkrollradius anhand eines beispielhaften Rades;
- Fig. 5: mögliche Gelenkpunkte einer Radaufhängung zur Justierung des Lenkrollradius; und
- Fig. 6: eine Ausführung des erfindungsgemäßen Verfahrens anhand eines Ablaufdiagramms.

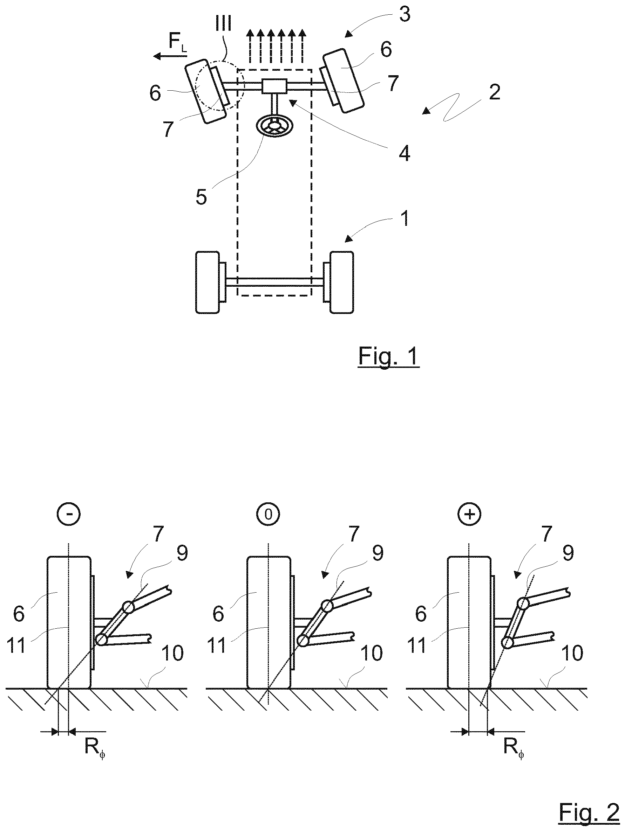

Die Fig. 1 zeigt in stark schematisierter Form eine starre Hinterachse 1 eines Kraftfahrzeugs 2, eine vordere Lenkachse 3 des Kraftfahrzeugs 2 mit einem ersten Lenksystem 4 sowie einer Lenkhandhabe 5 in Form eines Lenkrads 5. Die beiden Vorderräder 6 sind dabei an Radaufhängungen 7 befestigt und mit der Lenkachse 3 verbunden. Das erste Lenksystem 4 ist in den Ausführungsbeispielen als konventionelles Lenksystem 4, also beispielsweise als Achsschenkellenkung, ausgebildet. Über das konventionelle Lenksystem 4 kann in bekannter Weise eine Fahrtrichtung des Kraftfahrzeugs 2 beeinflusst werden.

Es ist vorgesehen, ein redundantes Lenksystem zu realisieren, indem ein Lenkrollradius Rφ (vgl. Fig. 2) der Lenkachse 3 justiert wird, wonach eine orthogonal zur Fahrtrichtung, die in Fig. 1 durch parallele Pfeile angedeutet ist, wirkende Kraftkomponente F_{L} im Bereich wenigstens eines Rades 6 auf das konventionelle Lenksystem 4 aufgebracht wird. In vorliegendem Ausführungsbeispiel wäre es von besonderem Vorteil, den Lenkrollradius Rφ an der Vorderachse 3, also der Lenkachse 3 des Kraftfahrzeugs 2, zu justieren. Gleichwohl kann es von Vorteil sein, die orthogonal zur Fahrtrichtung wirkende Kraftkomponente F_{L} auf die Vorderachse 3, also die Lenkachse 3 des Kraftfahrzeugs 2, aufzubringen.

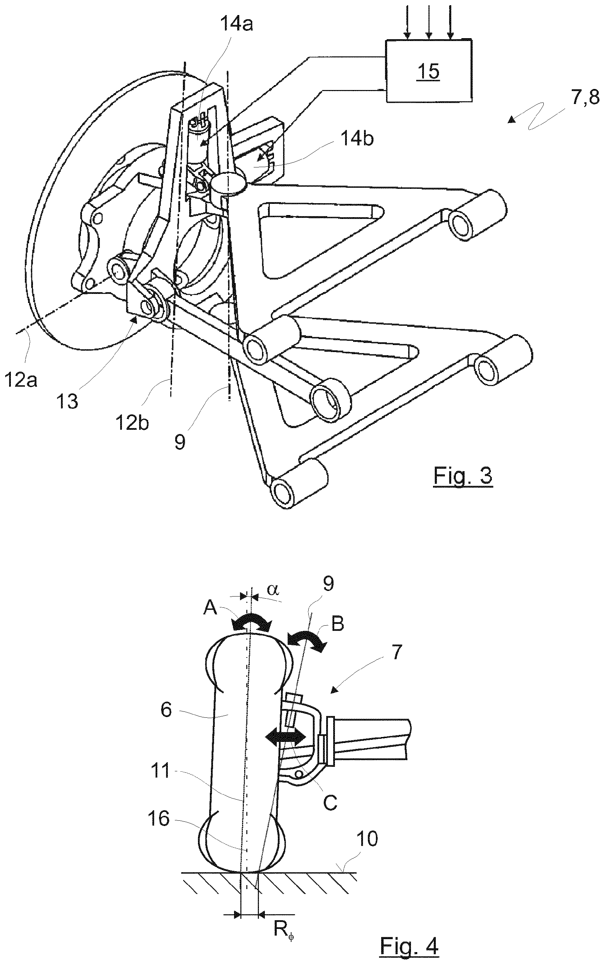

Es ist vorgesehen, dass die Räder 6 durch eine aktorisch verstellbare Radaufhängung 7 mit der Lenkachse 3 verbunden sind. Als Radaufhängung 7 kann beispielsweise ein Twin-Radträger 8 (vgl. Fig. 3), wie in der DE 10 2009 033 105 A1 beschrieben, verwendet werden.

Die orthogonal zur Fahrtrichtung wirkende Kraftkomponente F_{L} kann beispielsweise anteilig durch eine Beeinflussung der Drehmomente, die auf die wenigstens zwei Räder 6 der Lenkachse 3 aufgebracht werden, erzeugt werden. Für eine Beeinflussung der Fahrtrichtung des Kraftfahrzeugs 2 nach links in Fig. 1 kann beispielsweise das linke Vorderrad 6 des Kraftfahrzeugs 2 in Fig. 1 angebremst werden. Optional kann vorgesehen sein, zusätzlich das rechte Vorderrad 6 zu beschleunigen. Es kann aber auch vorgesehen sein, lediglich das rechte Vorderrad 6 des Kraftfahrzeugs 2 der Fig. 1 zu beschleunigen, während das linke Vorderrad 6 unbeeinflusst bleibt. Durch alle genannten Ausführungen wird ein Giermoment erzeugt, wodurch sich das Kraftfahrzeug 2 um das langsamer drehende Rad 6 zu drehen versucht. Dies ist selbst dann möglich, wenn das konventionelle Lenksystem 4 durch einen Totalausfall vollständig blockiert ist.

Dadurch, dass zuvor der Lenkrollradius Rφ verändert und vorzugsweise ausgehend von einer Grundeinstellung quantitativ erhöht wurde, ist das konventionelle Lenksystem 4 grundsätzlich für Manipulationen bzw. Störungen anfällig. Durch die aufgebrachte, orthogonal zur Fahrtrichtung wirkende Kraftkomponente F_{L}, beispielsweise durch Beeinflussung der jeweiligen Drehmomente, die auf die wenigstens zwei Räder 6 der Lenkachse 3 aufgebracht werden und das somit entstehende Giermoment, wird das gesamte konventionelle Lenksystem 4 beeinflusst. Hierdurch wird ein Auslenken des gesamten Lenksystems, auch der nicht beeinflussten Räder 6, erzeugt.

Die orthogonal zur Fahrtrichtung wirkende Kraftkomponente F_{L} kann auch über eine Verstellung des Spurwinkels oder sonstiger aktorischer Verstellungen der Radaufhängung 7, 8 erzeugt werden.

Es kann vorgesehen sein, das redundante Lenksystem automatisch in Betrieb zu nehmen, wenn das konventionelle Lenksystem 4 ausfällt oder in seiner Funktion eingeschränkt ist. Eine Steuerung und/oder eine Regelung des redundanten Lenksystems kann dann abhängig von einer Eingabe eines Fahrers an die Lenkhandhabe 5 durch die Stellgrößen Lenkrollradius Rφ der Lenkachse 3 und/oder Drehmomente, die auf die Räder 6 aufgebracht werden und/oder Drehzahlen der Räder 6 und/oder Spurwinkel der Räder 6 gesteuert bzw. geregelt werden.

In Fig. 2 sind drei beispielhafte Einstellmöglichkeiten für den Lenkrollradius Rφ dargestellt. Ein negativer Lenkrollradius Rφ (vgl. linke Abbildung in Fig. 2) liegt definitionsgemäß vor, wenn die gedachte, verlängerte Linie der Lenkachse 9 die Fahrbahnfläche 10 weiter außen schneidet als die Mittellinie 11 der Radaufstandsfläche. Ein negativer Lenkrollradius Rφ wirkt spurstabilisierend und wird aus Komfortgründen häufig in Kraftfahrzeugen 2 eingesetzt. Allerdings ist ein negativer Lenkrollradius Rφ schlecht geeignet, um eine redundante Lenkung, beispielsweise durch Beeinflussung der Drehmomente, zu realisieren. Der negative Lenkrollradius Rφ würde selbstverständlich auch einer gewollten Beeinflussung des Lenksystems, also einer Beeinflussung, die von dem redundanten Lenksystems ausgeht, entgegen wirken und die Spur entsprechend stabilisieren. Es kann daher von Vorteil sein, den Lenkrollradius Rφ vor Einsatz des redundanten Lenksystems quantitativ zu erhöhen. Eine derartige Erhöhung kann beispielsweise auf einen Lenkrollradius Rφ = 0 (vgl. mittlere Abbildung in Fig. 2) abzielen, bei dem der Schnittpunkt der gedachten, verlängerten Linie der Lenkachse 9 durch den Schnittpunkt der Mittellinie 11 der Radaufstandsfläche mit der Fahrbahnfläche 10 verläuft.

Dies stellt einen guten Kompromiss aus Komfort und möglicher Einflussnahme des hier beschriebenen redundanten Lenksystems dar. Falls es vorgesehen ist, den Funktionsumfang des hier vorgeschlagenen redundanten Lenksystems noch weiter zu erhöhen, kann der Lenkrollradius Rφ auch auf einen positiven oder stark positiven Wert eingestellt werden. Der Schnittpunkt der gedachten, verlängerten Linie der Lenkachse 9 durch die Fahrbahnfläche 10 verläuft in diesem Fall weiter innen, also näher am Zentrum des Kraftfahrzeugs 2, relativ zu dem Schnittpunkt der Mittellinie 11 der Radaufstandsfläche mit der Fahrbahnfläche 10.

In Fig. 3 ist ein Twin-Radträger 8, der in vorteilhafter Weise als Radaufhängung 7 Verwendung finden kann, dargestellt. Es handelt sich um eine Darstellung gemäß DE 10 2009 033 105 A1. Die Fig. 3 zeigt dabei eine linksseitige Radaufhängung 7. Vorliegend sind zwei Schwenkachsen 12a, 12b des Twin-Radträgers 8 kardanisch schwenkbar mit einer Basisplatte 13 verbunden, so dass sowohl der Sturz α (vgl. Fig. 4) - um die horizontale Schwenkachse 12a - als auch der Lenkwinkel - um die vertikale Schwenkachse 12b - des Rades 6 verstellbar sind. Zur Verstellung sind zwei etwa zylindrisch ausgeführte Aktuatoren 14a, 14b vorgesehen, die sich in nicht dargestellter Weise aus einem Elektromotor und einem selbsthemmenden Stelltrieb, insbesondere einem linearen Schraubentrieb, zusammensetzen. Die Elektromotoren der Aktuatoren 14a, 14b sind mit einem elektronischen Steuergerät 15 verbunden und können zur einzelnen oder gleichzeitigen Verstellung des Sturzes α oder des Lenkwinkels entsprechend angesteuert werden. Für nähere Details wird auf die DE 10 2009 033 105 A1 verwiesen.

In Kombination mit der vorliegenden Erfindung kann der dargestellte Twin-Radträger 8 einfach zur Justierung des Lenkrollradius Rφ durch eine Veränderung des Sturzes α (vgl. Fig. 4) über den Aktuator 14a verwendet werden. Nach Justierung des Lenkrollradius Rφ kann, wie bereits erwähnt, durch eine Beeinflussung der Drehmomente, die auf die wenigstens zwei Räder 6 der Lenkachse 3 aufgebracht werden, die orthogonal zur Fahrtrichtung wirkende Kraftkomponente F_{L} auf das konventionelle Lenksystem 4 aufgebracht werden. Der dargestellte Twin-Radträger 8 kann ebenfalls dazu verwendet werden, eine orthogonal zur Fahrtrichtung wirkende Kraftkomponente F_{L} durch eine Verstellung des Spurwinkels durch den Aktuator 14b auf das konventionelle Lenksystem 4 aufzubringen. Es kann eine Verstellung des Spurwinkels α und eine Beeinflussung der Drehzahlen der wenigstens zwei Räder 6 der Lenkachse 3 relativ zueinander bzw. eine Beeinflussung der auf die Räder 6 jeweils aufgebrachten Drehmomente in Kombination verwendet werden.

Es kann vorgesehen sein, dass der Lenkrollradius Rφ über weitere Maßnahmen justiert wird. Zur Verdeutlichung sind einige mögliche Stellgrößen in Fig. 4 anhand eines beispielhaften Rades 6 verdeutlicht. Beispielsweise kann der Lenkrollradius Rφ justiert werden, indem der Sturz α des Rades 6 verstellt wird; in Fig. 4 durch den Pfeil A angedeutet. Es wird also die Neigung der Radebene bezüglich einer orthogonalen Linie 16 durch die Fahrbahnfläche 10 verändert. Hierdurch kann der Abstand zum Schnittpunkt der gedachten, verlängerten Linie der Lenkachse 9 durch die Fahrbahnfläche 10 und somit der Lenkrollradius Rφ eingestellt werden. Alternativ kann auch eine Spreizung, also eine Verstellung der Lenkachse 9, den Lenkrollradius Rφ beeinflussen; in Fig. 4 durch den Pfeil B angedeutet. Auch eine horizontale Verschiebung der Radaufhängung 7, beispielsweise durch Manipulation der Einpresstiefe der Felge, also eine direkte Beeinflussung des sogenannten Störkrafthebels, kann den Lenkrollradius Rφ verändern; dies ist in Fig. 4 durch den Pfeil C angedeutet. Derartige Einstellungen können über aktorische Maßnahmen erfolgen.

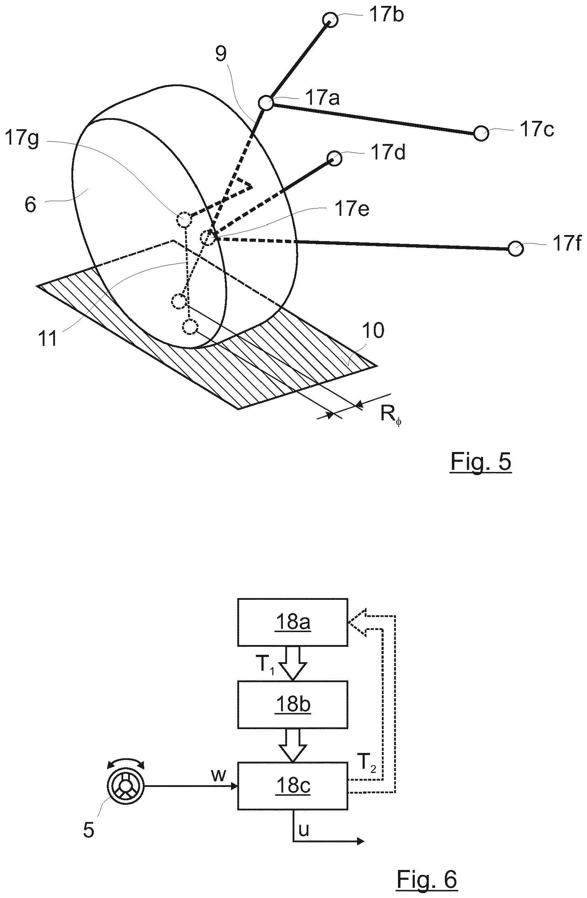

In Fig. 5 sind einige Gelenkpunkte 17 einer Radaufhängung 7 dargestellt. Eine Manipulation dieser Gelenkpunkte 17, die beispielsweise durch die technischen Merkmale eines Twin-Radträgers 8 ermöglicht wird, kann der Manipulation des Lenkrollradius Rφ dienen. Beispielsweise können die Gelenkpunkte 17a und/oder 17e der Radaufhängung 7 verschoben werden. Wird beispielsweise der Gelenkpunkt 17e nach außen, also vom Kraftfahrzeug 2 weg, bewegt, so wird der Lenkrollradius Rφ quantitativ erhöht, da sich die Spreizung der Lenkachse 9 ändert. Eine Bewegung des Gelenkpunkts 17e nach innen, also zum Kraftfahrzeug 2 hin, führt zu einem verkleinerten Lenkrollradius Rφ.

In Fig. 6 ist schematisch ein Ablaufdiagramm einer möglichen Ausführung der Erfindung gezeigt. Grundsätzlich ist vorgesehen, dass sich das redundante Lenksystem während des ordnungsgemäßen Betriebes des konventionellen Lenksystems 4 in einem Grundzustand 18a befindet, in dem es das Kraftfahrzeug 2 nicht beeinflusst. Ein Ausfall oder teilweiser Ausfall des konventionellen Lenksystems 4 kann als Auslöser T₁ bzw. Trigger T₁ dienen, um das redundante Lenksystem in Betrieb zu nehmen. Bei Inbetriebnahme des redundanten Lenksystems kann zunächst der Lenkrollradius Rφ ausgehend von einer Grundeinstellung erhöht werden; in Fig. 6 als Zustand 18b gekennzeichnet. Anschließend kann in Zustand 18c eine Steuerung und/oder eine Regelung des redundanten Lenksystems abhängig von einer Eingabe eines Fahrers an eine Lenkhandhabe 5, in Fig. 6 als Sollwert w dargestellt, durch Stellgrößen u, umfassend den Lenkrollradius Rφ und/oder die Drehmomente, die auf die Räder 6 aufgebracht werden und/oder den Spurwinkel der Räder 6 steuern bzw. regeln. Selbstverständlich kann auch die jeweilige Drehzahl der Räder 6 berücksichtigt werden. Der Fahrer des Kraftfahrzeugs 2 kann somit das Kraftfahrzeug 2 auch bei einem Totalausfall des konventionellen Lenksystems 4 noch kontrollieren und gegebenenfalls sogar in eine Werkstatt fahren. Optional kann auch vorgesehen sein, dass als weiterer Auslöser T₂ eine Betriebsbereitschaft der konventionellen Lenkung 4 verwendet wird. Dabei kann das redundante Lenksystem wieder deaktiviert und in den Grundzustand 18a zurückversetzt werden.

Der dargestellte Ablauf der Fig. 6 kann beispielsweise als Computerprogramm mit Programmcodemitteln auf einem Mikroprozessor eines Computers, insbesondere auf einem elektronischen Regel- und/oder Steuergerät 15 eines Kraftfahrzeugs 2, ausgeführt werden.

## Patentansprüche

1. Verfahren zur Beeinflussung der Fahrtrichtung von Kraftfahrzeugen (2), wobei das Kraftfahrzeug (2) ein erstes Lenksystem (4) umfasst, aufweisend wenigstens eine Lenkachse (3) mit wenigstens zwei Rädern (6), wobei die Räder (6) durch aktorisch verstellbare Radaufhängungen (7, 8) mit der Lenkachse (3) verbunden sind, wobei ein redundantes Lenksystem realisiert wird, indem ein Lenkrollradius (Rφ) wenigstens einer der Lenkachsen (3) justiert wird, wonach eine orthogonal zur Fahrtrichtung wirkende Kraftkomponente (F_{L}) im Bereich wenigstens eines Rades (6) auf das erste Lenksystem (4) aufgebracht wird,
**dadurch gekennzeichnet, dass**
die orthogonal zur Fahrtrichtung wirkende Kraftkomponente (F_{L}) zumindest anteilig durch eine Beeinflussung der Drehmomente, die auf die wenigstens zwei Räder (6) der Lenkachse (3) aufgebracht werden, erzeugt wird, wobei eine Steuerung und/oder eine Regelung das redundante Lenksystem abhängig von einer Eingabe eines Fahrers an eine Lenkhandhabe (5) durch die Stellgrößen (u) Lenkrollradius (Rφ) der Lenkachse (3) und Drehmomente, die auf die Räder (6) aufgebracht werden, steuert bzw. regelt.

2. Verfahren zur Beeinflussung der Fahrtrichtung von Kraftfahrzeugen (2) nach Anspruch 1,
**dadurch gekennzeichnet, dass**
die orthogonal zur Fahrtrichtung wirkende Kraftkomponente (F_{L}) zumindest anteilig durch eine Verstellung des Spurwinkels wenigstens eines der Räder (6) der Lenkachse (3) erzeugt wird.

3. Verfahren zur Beeinflussung der Fahrtrichtung von Kraftfahrzeugen (2) nach einem der Ansprüche 1 oder 2,
**dadurch gekennzeichnet, dass**
der Lenkrollradius (R_{φ}) der wenigstens einen Lenkachse (3) derart justiert wird, dass der Lenkrollradius (Rφ) während des Betriebes des redundanten Lenksystems, ausgehend von einer Grundeinstellung, quantitativ erhöht ist.

4. Verfahren zur Beeinflussung der Fahrtrichtung von Kraftfahrzeugen (2) nach einem der Ansprüche 1 bis 3,
**dadurch gekennzeichnet, dass**
der Lenkrollradius (Rφ) an einer Vorderachse (3) des Kraftfahrzeugs (2) justiert wird und/oder die orthogonal zur Fahrtrichtung wirkende Kraftkomponente (F_{L}) auf eine Vorderachse (3) des Kraftfahrzeugs (2) aufgebracht wird.

5. Verfahren zur Beeinflussung der Fahrtrichtung von Kraftfahrzeugen (2) nach einem der Ansprüche 1 bis 4,
**dadurch gekennzeichnet, dass**
die Steuerung und/oder die Regelung das redundante Lenksystem abhängig von der Eingabe des Fahrers an die Lenkhandhabe (5) durch eine zusätzliche Stellgröße (u) betreffend einen Spurwinkel der Räder (6) steuert bzw. regelt.

6. Verfahren zur Beeinflussung der Fahrtrichtung von Kraftfahrzeugen (2) nach einem der Ansprüche 1 bis 5,
**dadurch gekennzeichnet, dass**
der Lenkrollradius (Rφ) justiert wird, indem ein Sturz (α) und/oder eine Spreizung und/oder ein oder mehrere Gelenkpunkte (17a, 17b, 17c, 17d, 17e, 17f, 17g) der Radaufhängungen (7, 8) der wenigstens einen Lenkachse (3) mittels eines Aktuators (14a, 14b) verstellt wird.

7. Verfahren zur Beeinflussung der Fahrtrichtung von Kraftfahrzeugen (2) nach einem der Ansprüche 1 bis 6,
**dadurch gekennzeichnet, dass**
das redundante Lenksystem automatisch in Betrieb genommen wird, wenn das erste Lenksystem (4) ausfällt oder in seiner Funktion eingeschränkt ist.

8. Kraftfahrzeug (2) mit einem redundanten Lenksystem, umfassend eine Lenkachse (3) mit wenigstens zwei Rädern (6), wobei die Räder (6) durch aktorisch verstellbare Radaufhängungen (7, 8) mit der Lenkachse (3) verbunden sind, und eine Einrichtung zur Erzeugung einer orthogonal zur Fahrtrichtung wirkende Kraftkomponente (F_{L}) im Bereich wenigstens eines Rades (6), die auf das erste Lenksystem (4) wirkt,
**dadurch gekennzeichnet, dass**
das redundante Lenksystem eine Vorrichtung zur Justierung des Lenkrollradius (Rφ) wenigstens einer der Lenkachsen (3) und wenigstens ein elektronisches Regel- und/oder Steuergerät (15) aufweist, auf dem ein Verfahren gemäß einem der Ansprüche 1 bis 7 ausführbar ist.

9. Computerprogramm mit Programmcodemitteln, um ein Verfahren gemäß einem der Ansprüche 1 bis 7 durchzuführen, wenn das Programm auf einem Mikroprozessor eines Computers, insbesondere auf einem elektronischen Regel- und/oder Steuergerät (15) eines Kraftfahrzeugs (2), ausgeführt wird.

## Claims

1. Method for influencing the direction of travel of motor vehicles (2), wherein the motor vehicle (2) includes a first steering system (4), having at least one steering axle (3) with at least two wheels (6), wherein the wheels (6) are connected with the steering axle (3) by means of actuator-adjustable wheel suspensions (7, 8), wherein a redundant steering system is realised in that a kingpin offset (Rφ) of at least one of the steering axles (3) is adjusted, according to which a force component (F_{L}) acting orthogonally to the direction of travel is applied in the region of at least one wheel (6) to the first steering system (4),
**characterised in that**
the force component (F_{L}) acting orthogonally to the direction of travel is generated at least in part by means of an influencing of the torques which are applied to the at least two wheels (6) of the steering axle (3), wherein a controlling and/or a regulation controls or regulates the redundant steering system as a function of an input of a driver at a steering wheel (5) by means of the control variables (u) kingpin offset (Rφ) of the steering axle (3) and torques which are applied to the wheels (6).

2. Method for influencing the direction of travel of motor vehicles (2) according to claim 1,
**characterised in that**
the force component (F_{L}) acting orthogonally to the direction of travel is generated at least in part by means of an adjustment of the toe angle of at least one of the wheels (6) of the steering axle (3).

3. Method for influencing the direction of travel of motor vehicles (2) according to any of claims 1 or 2,
**characterised in that**
the kingpin offset (Rφ) of the at least one steering axle (3) is adjusted such that the kingpin offset (Rφ) is quantitatively increased during the operation of the redundant steering system, starting from a basic setting.

4. Method for influencing the direction of travel of motor vehicles (2) according to any of claims 1 to 3,
**characterised in that**
the kingpin offset (Rφ) is adjusted at a front axle (3) of the motor vehicle (2) and/or the force component (F_{L}) acting orthogonally to the direction of travel is applied to a front axle (3) of the motor vehicle (2).

5. Method for influencing the direction of travel of motor vehicles (2) according to any of claims 1 to 4,
**characterised in that**
the controlling and/or the regulating controls or regulates the redundant steering system as a function of the input of the driver to the steering wheel (5) by means of an additional control variable (u) concerning a toe angle of the wheels (6).

6. Method for influencing the direction of travel of motor vehicles (2) according to any of claims 1 to 5,
**characterised in that**
the kingpin offset (Rφ) is adjusted **in that** a camber (α) and/or a steering axis inclination and/or one or several pivot points (17a, 17b, 17c, 17d, 17e, 17f, 17g) of the wheel suspensions (7, 8) of the at least one steering axle (3) is adjusted by means of an actuator (14a, 14b).

7. Method for influencing the direction of travel of motor vehicles (2) according to any of claims 1 to 6,
**characterised in that**
the redundant steering system is put into operation automatically when the first steering system (4) fails or is limited in its function.

8. Motor vehicle (2) having a redundant steering system comprising a steering axle (3) with at least two wheels (6), wherein the wheels (6) are connected with the steering axle (3) by means of actuator-adjustable wheel suspensions (7, 8), and a device for generating a force component (F_{L}) acting orthogonally to the direction of travel in the region of at least one wheel (6), which acts on the first steering system (4),
**characterised in that**
the redundant steering system has a device for adjusting the kingpin offset (Rφ) of at least one of the steering axles (3) and at least one electronic regulating and/or controlling device (15) on which a method according to any of claims 1 to 7 can be carried out.

9. Computer programme having programme coding means in order to carry out the method according to any of claims 1 to 7 when the program is run on a microprocessor of a computer, in particular on an electronic regulating and/or control device (15) of a motor vehicle (2).

## Revendications

1. Procédé permettant d'influencer le sens de marche de véhicules automobiles (2), dans lequel le véhicule automobile (2) comprend un premier système de direction (4), présentant au moins un essieu directeur (3) pourvu d'au moins deux roues (6), dans lequel les roues (6) sont reliées à l'essieu directeur (3) par des suspensions de roues réglables par actionneur (7, 8), dans lequel un système de direction redondant est réalisé en ajustant un déport au sol (Rφ) d'au moins un des essieux directeurs (3), par la suite une composante de force (F_{L}) agissant orthogonalement par rapport au sens de marche est appliquée sur le premier système de direction (4) dans la zone d'au moins une roue (6),
**caractérisé en ce que**
la composante de force (F_{L}) agissant orthogonalement par rapport au sens de marche est générée au moins proportionnellement par un effet des moments de rotation qui sont appliqués sur les au moins deux roues (6) de l'essieu directeur (3), dans lequel une commande et/ou un réglage du système de direction redondant effectue une commande ou un réglage en fonction d'une entrée du conducteur au niveau d'une manette de direction (5) par les grandeurs de réglage (u), déport au sol (Rφ) de l'essieu directeur (3) et moments de rotation qui sont appliqués sur les roues (6).

2. Procédé permettant d'influencer le sens de marche de véhicules automobiles (2) selon la revendication 1,
**caractérisé en ce que**
la composante de force (F_{L}) agissant orthogonalement par rapport au sens de marche est générée au moins proportionnellement par un réglage de l'angle de carrossage d'au moins une des roues (6) de l'essieu directeur (3).

3. Procédé permettant d'influencer le sens de marche de véhicules automobiles (2) selon l'une quelconque des revendications 1 ou 2,
**caractérisé en ce que**
le déport au sol (Rφ) de l'au moins un essieu directeur (3) est ajusté de telle sorte que le déport au sol (Rφ) est augmenté quantitativement pendant le fonctionnement du système de direction redondant, à partir d'un réglage de base.

4. Procédé permettant d'influencer le sens de marche de véhicules automobiles (2) selon l'une quelconque des revendications 1 à 3
**caractérisé en ce que**
le déport au sol (Rφ) est ajusté au niveau d'un essieu avant (3) du véhicule automobile (2) et/ou la composante de force (F_{L}) agissant orthogonalement par rapport au sens de marche est appliquée sur un essieu avant (3) du véhicule automobile (2).

5. Procédé permettant d'influencer le sens de marche de véhicules automobiles (2) selon l'une quelconque des revendications 1 à 4,
**caractérisé en ce que**
la commande et/ou le réglage du système de direction redondant effectue une commande ou un réglage en fonction de l'entrée du conducteur au niveau d'une manette de direction (5) par une grandeur de réglage (u) supplémentaire concernant un angle de carrossage des roues (6).

6. Procédé permettant d'influencer le sens de marche de véhicules automobiles (2) selon l'une quelconque des revendications 1 à 5,
**caractérisé en ce que**
le déport au sol (Rφ) est ajusté en réglant un carrossage (α) et/ou une chasse et/ou un ou plusieurs points d'articulation (17a, 17b, 17c, 17d, 17e, 17f, 17g) des suspensions de roue (7, 8) de l'au moins un essieu directeur (3) au moyen d'un actionneur (14a, 14b).

7. Procédé permettant d'influencer le sens de marche de véhicules automobiles (2) selon l'une quelconque des revendications 1 à 6,
**caractérisé en ce que**
le système de direction redondant fonctionne automatiquement lorsque le premier système de direction (4) est en panne ou que sa fonction est limitée.

8. Véhicule automobile (2) pourvu d'un système de direction redondant, comprenant un essieu directeur (3) avec au moins deux roues (6), dans lequel les roues (6) sont reliées à l'essieu directeur (3) par des suspensions de roues réglables par actionneur (7, 8), et un équipement de génération d'une composante de force (F_{L}) agissant orthogonalement par rapport au sens de marche qui agit sur le premier système de direction (4) dans la zone d'au moins une roue (6),
**caractérisé en ce que**
le système de direction redondant présente un dispositif d'ajustement du déport au sol (Rφ) d'au moins un des essieux directeurs (3) et d'au moins un dispositif de réglage et/ou de commande électronique (15) sur lequel un procédé selon l'une quelconque des revendications 1 à 7 peut être exécuté.

9. Programme informatique doté de moyens de codage de programme pour réaliser un procédé selon l'une quelconque des revendications 1 à 7, lorsque le programme est exécuté sur un microprocesseur d'un ordinateur, en particulier sur un dispositif de réglage et/ou de commande électronique (15) d'un véhicule automobile (2).
